# EUROPEAN PATENT SPECIFICATION

(11) **EP 3 737 542 B1**
(45) Date of publication and mention of the grant of the patent: **05.04.2023**
(21) Application number: 19700378.3
(22) Date of filing: 10.01.2019
(51) Int. Cl.: B27B 33/08, B23D 61/02

(54) **A CIRCULAR SAWBLADE FOR CLEARING SAWING**
KREISSÄGEBLATT
LAME DE SCIE CIRCULAIRE POUR DÉBROUSSAILLAGE

(30) Priority: 11.01.2018 SE 1850033
(43) Date of publication of application: 18.11.2020
(73) Proprietor: HUSQVARNA AB, 561 82 Huskvarna (SE)
(72) Inventor: HAGBERG, Albin, 55317 HUSKVARNA (SE)
(86) International application number: PCT/EP2019/050581
(87) International publication number: WO 2019/138011

(56) References cited:
- EP-A1- 3 075 480
- AU-B1- 492 353
- GB-A- 101 035
- US-A- 754 134
- US-A- 2 703 593
- US-A- 5 331 876
- US-A1- 2005 028 664

## Description

### Technical field

The present disclosure relates to a circular sawblade for clearing sawing.

### Background art

Hand held powered clearing saws are used for cutting small trees and brush and comprises a rotating circular sawblade with spaced apart cutting teeth. During sawing with conventional clearing sawblades, the major part of the tree material that is removed by the sawblade from the kerf is reduced by the sawblade to saw dust. The breakdown of wood material into sawdust results in the drawback in a relatively high energy consumption of clearing saw. A further drawback with conventional clearing sawblades is the tendency of the sawblade to kickback or bounce out of the kerf during sawing. This is cumbersome for the user of the clearing saw since the user then need to apply a considerable amount of physical strength to control the movement of the sawblade during clearing sawing.

AU 492 353 B1 discloses a circular saw blade according to the preamble of claim 1.

US754134 shows a circular sawblade for sawing timber into lumber which comprises alternating cutting and planning teeth. However, the sawblade of US754134 is not configured to be used in a hand-held clearing saw. Rather the sawblade is dimensioned to be arranged in a sawing mill and the purpose of the alternating distribution of the cutting teeth and planning teeth is to achieve planning of the sides of the kerf during sawing of the lumber. Thereby is a very smooth surface of the lumber achieved in one single sawing operation .

Thus, it is an object of the present disclosure to provide a clearing sawblade that solves or at least mitigates one of the drawbacks of the prior-art. In detail it is an object of the present disclosure to achieve a circular sawblade for clearing sawing that provides a stable sawing process during clearing sawing. Moreover, it is an object of the present disclosure to provide a circular sawblade for clearing sawing that that allows for clearing sawing with relatively low energy consumption.

### Summary of the disclosure

According to the present disclosure, at least one of these objects is achieved by a circular sawblade 10 for clearing sawing configured to be used in a powered hand-held clearing saw and comprising a central opening 12 for releasable attachment to a clearing saw and a plurality of teeth 200, 300 and gullets 13 arranged alternating at the periphery of the sawblade 10 in a rotation direction (R), wherein the teeth 200, 300 comprises rake teeth 200, wherein;
- each rake tooth 200 has a leading side 210 facing in the rotation direction R and comprising a rake face 211 and a trailing side 220 comprising a release face 221 and a cutting edge 230 extending between the rake face 211 and the release face 221, wherein a hook angle (V) of the rake face 210 of the rake tooth 200 is greater than 0°; characterized in that the teeth 200, 300 comprise scoring teeth 300, wherein;
- each scoring tooth 300 has a leading side 310 facing in the rotation direction (R) and comprising a rake face 311 and a cutting edge 330 and a trailing side 320 comprising a release face 321, wherein a hook angle (X) of the rake face 311 of the scoring tooth 300 is equal to, or less than, 0° and that the scoring teeth 300 alternatingly are set in opposite directions out from a symmetry plane (Z) of the sawblade 10 and wherein;
the teeth 200, 300 are distributed along the periphery of the sawblade (10) in a repeating order of a first scoring tooth (300.1) followed by a second scoring tooth 300.2 followed by a rake tooth 200.

The circular sawblade according to the present disclosure is very energy efficient due to the particular distribution of scoring teeth and rake teeth. Thus, during sawing, the first and second pointed scoring teeth cut with little resistance two narrow slots on opposing sides of a piece of wood. This piece may subsequently be cut out with little force by the following rake tooth.

A further advantage of the circular sawblade according to the present disclosure is that the feeding force of the sawblade during sawing may be controlled or reduced. During sawing, the rake teeth effectively cut out chips of wood from the trunk of the tree. However, since the rake teeth are optimized for cutting and very sharp, the sawblade is at the same time pulled into the tree. This phenomena is known as the feeding force of the sawblade or "blade self-feeding" and may be experienced as uncomfortable to the user. In the circular sawblade of the present disclosure, the set scoring teeth effectively prevent or reduce the feed force by bearing against the wood in the kerf and thus counteract the strive of the rake teeth to cut into the wood. By design of the scoring teeth in terms of degree of setting and length it is possible to essentially eliminate the feeding force of the blade. Or to control the feeding force of the blade in view of user preferences.

Further alternatives and advantages of the circular sawblade are disclosed in the following description and the appended claims.

### Brief description of the drawings

Figure 1: A schematic drawing of a circular sawblade for a clearing saw according to the present disclosure in a planar view.
Figure 2: A schematic drawing of a circular sawblade for a clearing saw according to the present disclosure in perspective view.
Figure 3: A schematic drawing of a section of circular sawblade for a clearing saw according to the present disclosure in side view.
Figure 4: A schematic drawing of an enlarged section of the circular sawblade shown in figure 3.

### Detailed description of embodiments

The circular sawblade for a clearing saw according to the present disclosure will now be described more fully hereinafter. The circular sawblade for a clearing saw according to the present disclosure may however be embodied in many different forms and should not be construed as limited to the embodiment set forth herein. Rather, this embodiment is provided by way of example so that this disclosure will be thorough and complete, and will fully convey the scope of the present disclosure to those persons skilled in the art. In the following description the circular sawblade for a clearing saw according to the present disclosure is referred to as the "sawblade"

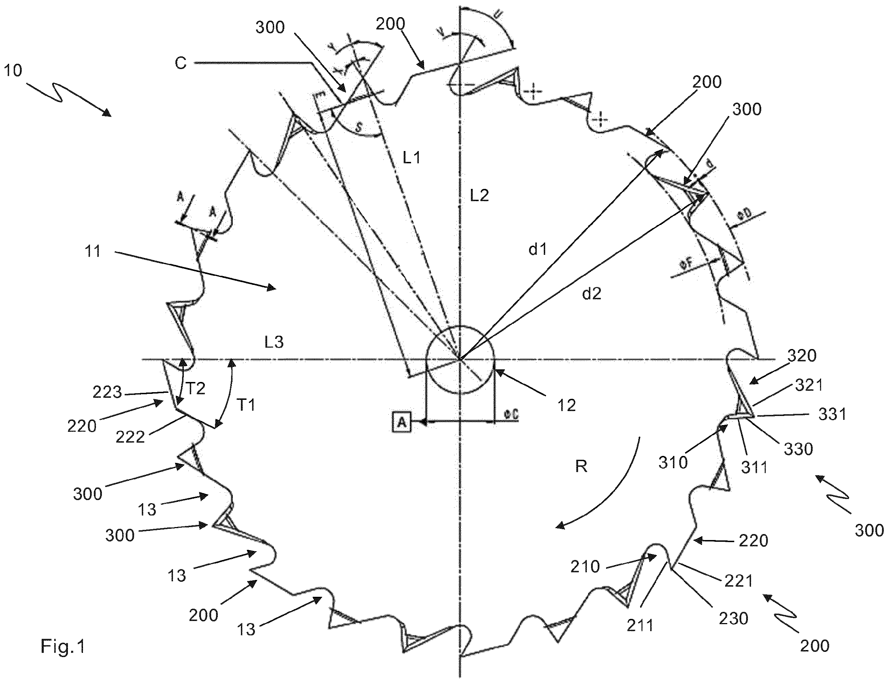

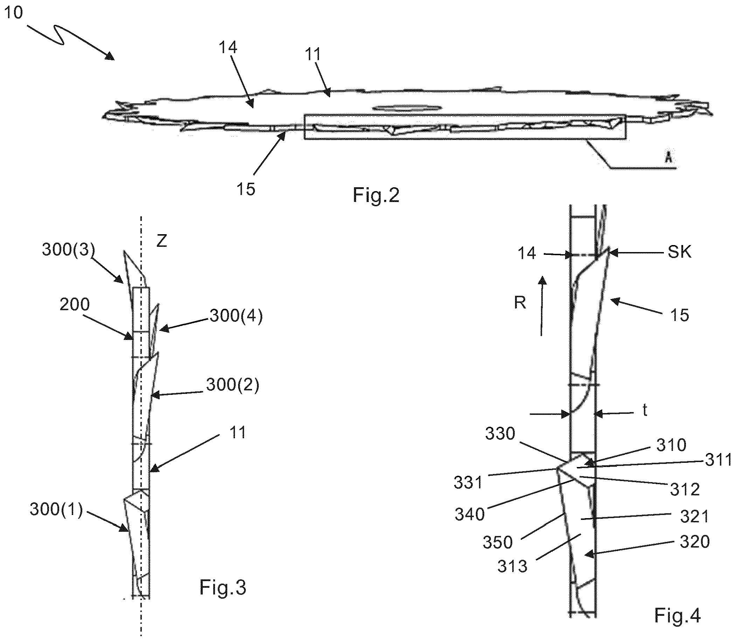

Figure 1 shows a planar front view of the sawblade 10. The sawblade 10 is circular and configured to be used in a powered hand held clearing saw (not shown). The sawblade has opposite first and second side faces 14, 15 (see figure 2) and comprises a central sawblade body 11 which may be flat and solid and has a central opening 12 for releasable attaching the sawblade to a clearing saw. A plurality of teeth 200, 300 and gullets 13 are arranged along the outer periphery of the sawblade. In other words, along the outer periphery of the sawblade body 11. In the embodiment of figure 1, the teeth 200, 300 and the sawblade body 11 are integral, i.e. formed by a single plate of metal. However, it is possible to produce the sawblade body 11 and the teeth 100 separately and subsequently attach the teeth to the periphery of the sawblade body. The sawblade may for example have diameter of 200 - 225 mm and a thickness of 1 - 2 mm. The central opening may be 20 or 25.4 mm. The sawblade may be manufactured of metal, such as steel and may comprise any suitable number of teeth. For example 18 to 30 teeth.

The teeth 200, 300 are arranged in a rotation direction R, i.e. the direction in which the sawblade rotates in the clearing saw.

The teeth 200, 300 of the sawblade 10 comprise two types of teeth: rake teeth 200 and scoring teeth 300. Preferably 1/3 of the teeth are rake teeth 200 and 2/3 of the teeth are scoring teeth 300. However, it is possible to have different distribution of rake teeth and scoring teeth as will be described hereinafter. In the following description various features relating to the rake teeth and the scoring teeth are described and in order to maintain the eligibility of figure 1 different features are discussed with reference to different teeth. However, it is appreciated that all rake teeth 200 have the same features and that all scoring teeth 300 have the same features.

When employing the sawblade for clearance cutting of e.g. a tree, the purpose of the scoring teeth 300 is to cut of the wood fiber of the tree with a minimum of resistance such that a narrow slot is created on opposite sides of a piece of wood that subsequently is cut out by the rake tooth 200.

To achieve this aim, each scoring tooth 300 comprises a leading side 310 having a rake face 311 and a trailing side 320 with a release face 321. The rake face 311 and the release face 320 may extend over the respective entire leading and trailing sides, or over a portion thereof. A cutting edge 330 extends along the rake face 311 in direction from the cutting point 331 of the scoring tooth towards the bottom of the adjacent gullet 13. According to the present disclosure, the hook angle X of the rake face 311 of the scoring teeth is equal to 0° or less than 0°. That is the hook angle X is negative. Determination of the hook angle X of the scoring teeth is schematically shown in figure 1 with reference to line L1. It is appreciated that the hook angle is an established standard of describing saw teeth configuration and does therefore not need to be described in detail.

In operation, this teeth configuration will cause the scoring teeth 300 to merely scratch off, or cut off, the wood fiber of the tree without essentially digging into the wood of the tree and ripping out pieces therefrom. The scoring teeth may thereby form narrow slots in the tree with a minimum of resistance and energy consumption Figure 4 shows a scoring tooth 300 in detail. Thus, the scoring tooth 300 comprises a joining edge 340 that extends in the junction between the rake face 311 on the leading side 310 and the release face 321 on the trailing side 320. The cutting edge 330 is constituted by at least a portion of the junction between the rake face 311 on the leading side 310 of the scoring tooth and one of the two side faces 14, 15 of the scoring tooth. The scoring tooth further comprises a trailing edge 350 which is constituted by at least a portion of the junction between the release face 321 on the trailing side 320 of the scoring tooth and the same one of the two side faces 14, 15 of the scoring tooth. The scoring tooth further comprises a cutting point 311 which is formed in the junction between the cutting edge 330, the joining edge 340 and the trailing edge 350.

At least the rake face 311 and also the release face 321 of the scoring teeth 300 may be provided with a bevel 312, 313 which faces in direction towards the symmetry plane Z of the sawblade. Beveling of the rake face 311 and the release face 321 maybe achieved by grinding. The bevel 312 extends from the joining edge 340, along the rake face 311 and the release face 221 and between the side faces 14 and 15 of the scoring tooth. Beveling of the rake face 311 results in a sharp cutting edge 330. Beveling of both rake face 311 and release face 321 results in a sharp cutting point 331 which effectively cut the wood fiber with very little resistance, since the contact area between the cutting point and the wood fiber is small.

The inclination Y of the release face 320 of the scoring teeth is selected for optimized cutting properties and may be 5° - 40°.

The scoring teeth 300 are alternatingly set in opposite directions out from the symmetry plane of the sawblade. In other words, the scoring teeth deviate from the symmetry plane of the sawblade. By this configuration, the scoring teeth will cut out two parallel slots between a piece of wood during sawing in order to provide a clearance for the sawblade and detach a piece of wood that may be cut out by the rake teeth.

Setting of the scoring teeth is shown in figure 3, which shows the encircled edge portion A of the sawblade 10 of figure 2 in a front view. An imaginary symmetry plane Z extends through the center of the sawblade such that the sawblade body 11 and the rake teeth 200 extends parallel with the symmetry plane Z. A first scoring tooth 300(1) is set to the left of the symmetry plane Z and a second scoring tooth 300(2) is set to the right of the symmetry plane Z. Further scoring teeth 300(3) and 300(4) are respectively set to the left and right of the symmetry plane Z.

Turning to figure 4. The scoring teeth 300 are typically set by bending. The degree of setting of the scoring teeth may be selected in view of e.g. the intended operational conditions the sawblade. Setting of a scoring tooth is typically determined as the axial distance SK, in the setting direction, from one side face 14 of the sawblade to the opposite side face 15 at the distal cutting point 331 of the scoring tooth. Setting of the scoring teeth 300 may thereby be in the range of t/3 - t wherein t is equal to the thickness of the sawblade.

Returning to figure 1. The scoring teeth 300 are set along a cross-setting line C. Both the setting angle S of the cross-setting line C and the position E of the cross-setting line C on the scoring tooth may vary. For example, the setting angle S may be 75° - 135°. The position E of cross-setting line is determined from the center of the sawblade along line L1 to the point where cross-setting line C intersects line L1. The position E may be F/2 <= E <= F/2 + (1/2)*(D-F), wherein F is two times the radial distance from the center of the blade to the bottom of the gullet and D is two times the radial distance from the center of the sawblade to the distal point of the scoring teeth. Alternatively, the position E may be F/2 <= E <= F/2 + 3*(D-F)/8.

The rake teeth 200 comprise a leading side 210 with a rake face 211 and a trailing side 220 with a release face 221. A cutting edge 230 extends between the rake face 211 and the release face 221. The hook angle V of the rake face 211 of the rake tooth 200 is greater than 0°. The hook angle V of a rake tooth 200 is determined with reference to line L2.

In operation, this teeth configuration will cause the rake teeth 200 to efficiently cut out the piece of wood that has been set free by the scoring teeth and subsequently transport the piece of wood out of the kerf.

The rake teeth 200 are not set and extend thus parallel with the symmetry plane Z (see figure 3). This feature provides effective transport of wood chips from the kerf since the wood chips only are subjected to forces parallel to the symmetry plane of the blade.

The inclination of the release face 220 is selected for sufficient clearance against the cut surface during sawing and may be 70° - 85°. It is also possible to design the release face with a varying inclination angle. For example, the release face 220 may have a radius.

Returning to figure 1. The scoring teeth 300 and the rake teeth 200 are configured such that the distance d1 from the center of the sawblade 10 to the cutting edge 211 of the rake teeth 200 is less than the distance d2 from the center of the sawblade 10 to the cutting point 331 of the scoring teeth 300. This will ensure that the rake teeth 200 only cut into wood that is detached by opposing slots formed by the scoring teeth 300. This further reduces the energy consumption of the clearing saw. It also provides good support for the scoring teeth in the wood during sawing and prevents or reduces self-feeding of the sawblade. The difference in distance between scoring teeth 300 and rake teeth 200 may be greater than 0 mm and preferably up to 2 mm. For example 0.3 mm - 2 mm.

The rake teeth 200 may be configured such that the trailing side 220 comprises a trailing side portion 222 and a top side portion 223 which comprises the release face 221. The trailing side portion 222 and the top side portion 223 have different inclination angles T1, T2 with respect to the normal L3 between the cutting edge 211 and the center of the sawblade. The inclination angle T1 of the trailing side portion is thereby less than the inclination angle T2 of the top face portion 100. For example the inclination T1 of the trailing side portion is 5° - 45° and the inclination T2of the top side portion is 70° - 85°. A large inclination angle T2 results in a rake tooth with a strong cutting edge which may be advantageous for hardwood. It also reduces the self-feeding of the blade. Small inclination angles T2 provides a self-feeding sawblade with weaker cutting edge but improved release angle which in combination with soft wood leads to less friction and lower energy consumption. It is possible to design the trailing side portion 222 and the top side portion 223 such that the inclination angles T1, T2 varies along the trailing side portion 222 and the top side portion 223. Thus, the trailing side portion 222 and the top side portion 223 may have a respective radius.

According to the invention, as shown in figure 1, the rake teeth 200 and the scoring teeth 300 are arranged along the periphery of the sawblade in a continuously repeating order of a first scoring tooth 300 followed by a second scoring tooth 300 followed by a rake tooth 200. The first and second scoring teeth thereby first form the two narrow slots on opposite sides of a piece of wood and the rake tooth may thereafter cut out the piece of wood. The repeating order of scoring teeth and rake teeth not according to the present invention may comprise any even number of scoring teeth 300 followed by a rake tooth 200. For example, six scoring teeth 300 followed by a rake tooth.

According to the invention hook angle X of the scoring teeth 300 is 0° - (-25°) and the hook angle V of the rake teeth 200 is greater than 0°. It has been shown that this teeth configuration results in low energy consumption and a minimum of reaction forces in the sawblade during clearance sawing. To achieve high sawing speed it is advantageous that the rake face of the rake teeth has a large hook angle V and therefore it is preferred that the hook angle V is 5° - 40°, more preferred 15° - 35°. However, the sharp hook angle V of the rake teeth needs 200 to be balanced by the contact between scoring teeth 300 and the wood during sawing. If too little contact exist between the scoring teeth and the wood during sawing, the rake teeth 200 will cause the sawblade to excessively self-feed. This is disadvantageous since it will result in high energy consumption and uncontrolled sawing. If the sawblade consumes more energy than is stored in the sawblade and provided by the engine of the clearing saw the result may be that the sawblade jams in the kerf during sawing. However, if too much contact exist between the scoring teeth 300 and the wood during sawing, reaction forces are created in the sawblade which may cause the sawblade to bounce out of the kerf. This, in turn, results in ineffective sawing and that the user is constrained to apply excessive feeding force to the clearing saw.

The contact between the scoring teeth 300 and the wood is on one hand determined by the hook angle X of the scoring teeth. A hook angle X of 0° or less prevents the cutting edge of the scoring teeth from biting into the wood with increased risk for reaction forces that may cause self-feeding of the sawblade. The lower limit of the hook angle X of the scoring teeth 200 is -45° since further increase of the negative hook angle results in poor cutting performance of the scoring teeth. According to the invention, the hook angle X of the scoring teeth is 0° - (-25°).

The degree of setting SK of the scoring teeth has also an impact on the reaction forces. It is important that the scoring teeth are set since contact between the scoring teeth and the wood contributes to balance the strive of the rake teeth to self-feed into the wood. The degree of setting SK of the scoring teeth is also important for avoiding too high friction between the faces of the sawblade and the kerf. Too little setting leads to ineffective sawing and may also lead to jamming of the blade in the kerf. However, too much setting results in too large contact between the scoring teeth and the wood and increased risk for the formation of reaction forces in the sawblade which in turn constrains the user to apply excessive feeding force to the clearance saw. To high degree of setting also results in ineffective sawing since a broad kerf is formed which increases the energy consumption of the clearing saw. The degree of setting of the scoring teeth is therefore preferably t/3 - t wherein t is equal to the thickness of the sawblade.

## Claims

1. A circular sawblade (10) for clearing sawing configured to be used in a powered hand-held clearing saw and comprising a central opening (12) for releasable attachment to a clearing saw and a plurality of teeth (200, 300) and gullets (13) arranged alternating at the periphery of the sawblade (10) in a rotation direction (R), wherein the teeth (200, 300) comprise rake teeth (200), wherein;
- each rake tooth (200) has a leading side (210) facing in the rotation direction R and comprising a rake face (211) and a trailing side (220) comprising a release face (221) and a cutting edge (230) extending between the rake face (211) and the release face (221), wherein a hook angle (V) of the rake face (210) of the rake tooth (200) is greater than 0°; wherein the teeth (200, 300) comprise scoring teeth (300), wherein;
- each scoring tooth (300) has a leading side (310) facing in the rotation direction (R) and comprising a rake face (311) and a cutting edge (330) and a trailing side (320) comprising a release face (321), wherein a hook angle (X) of the rake face (311) of the scoring tooth (300) is equal to, or less than, 0° and that the scoring teeth (300) alternatingly are set in opposite directions out from a symmetry plane (Z) of the sawblade (10) and wherein;
the teeth (200, 300) are distributed along the periphery of the sawblade (10) in a repeating order of a first scoring tooth (300.1) followed by a second scoring tooth (300.2) followed by a rake tooth (200),
wherein the scoring teeth (300) comprise a cutting point (331) and wherein the cutting edge (330) of the scoring teeth (300) extends from the cutting point (331),
wherein the distance (d1) from the center of the sawblade to the cutting edge (230) of the rake teeth (200) is less than the distance (d2) from the center of the sawblade (10) to the cutting point (331) of the scoring teeth (200,300), **characterized in that** the hook angle (X) of the scoring teeth (200) is 0° - (-25°). 2.

2. The circular sawblade (10) according to claim 1, wherein the rake face (311) and the release face (321) of the scoring teeth (300) are beveled.

3. The circular sawblade (10) according to anyone of claims 1 or 2, wherein the cutting edge (330) of the scoring teeth extends along at least a portion of a junction between the rake face (311) and a side face (14, 15) of the scoring teeth (300).

4. The circular sawblade (10) according to any of the preceding claims, wherein the scoring teeth (300) comprises a joining edge (340) that extends between the rake face (311) and the release face (221) and wherein the scoring teeth (300) comprises a trailing edge (350) and wherein the cutting point (331) is formed in a junction between the cutting edge (330), the joining edge (340) and the trailing edge (350).

5. The circular sawblade (10) according to anyone of claims 1 - 4, wherein the rake teeth (200) extend in the symmetry plane (Z) of the sawblade (10).

6. The circular sawblade (10) according to anyone of claims 1-5, wherein the hook angle (V) of the rake face (211) of the rake teeth (200) is 5° - 40°, preferably 15° - 35°.

7. The circular sawblade (10) according to anyone of claims 1-6, wherein the scoring teeth (300) are set a distance (SK) of t/3 - t wherein (t) is the thickness of circular sawblade (10).

## Patentansprüche

1. Kreissägeblatt (10) zum Freischneiden, das dazu ausgestaltet ist, in einem angetriebenen, handgehaltenen Freischneider verwendet zu werden, und eine mittlere Öffnung (12) zum freigebbaren Anbringen an einem Freischneider und eine Vielzahl von Zähnen (200, 300) und Zahnlücken (13) umfasst, die abwechselnd an dem Umfang des Sägeblatts (10) in einer Drehrichtung (R) angeordnet sind, wobei die Zähne (200, 300) Spanzähne (200) umfassen, wobei
- jeder Spanzahn (200) eine vordere Seite (210), die in die Drehrichtung R weist und eine Spanfläche (211) umfasst, und eine hintere Seite (220) hat, die eine Freigabefläche (221) und eine sich zwischen der Spanfläche (211) und der Freigabefläche (221) erstreckende Schneidkante (230) umfasst, wobei ein Spanwinkel (V) der Spanfläche (210) des Spanzahns (200) größer als 0° ist, wobei die Zähne (200, 300) Ritzzähne (300) umfassen, wobei
- jeder Ritzzahn (300) eine vordere Seite (310), die in die Drehrichtung (R) weist und eine Spanfläche (311) und eine Schneidkante (330) und eine hintere Seite (320) umfasst, die eine Freigabefläche (321) umfasst, wobei ein Spanwinkel (X) der Spanfläche (311) des Ritzzahns (300) gleich oder kleiner als 0° ist und die Ritzzähne (300) abwechselnd in entgegengesetzten Richtungen aus einer Symmetrieebene (Z) des Sägeblatts (10) stehen und wobei
die Zähne (200, 300) entlang des Umfangs des Sägeblatts (10) in einer sich wiederholenden Ordnung eines ersten Ritzzahns (300.1), gefolgt von einem zweiten Ritzzahn (300.2), gefolgt von einem Spanzahn (200) verteilt sind,
wobei die Ritzzähne (300) einen Schneidpunkt (331) umfassen und wobei sich die Schneidkante (330) der Ritzzähne (300) von dem Schneidpunkt (331) erstreckt,
wobei der Abstand (d1) von der Mitte des Sägeblatts zu der Schneidkante (230) der Spanzähne (200) kleiner als der Abstand (d2) von der Mitte des Sägeblatts (10) zu dem Schneidpunkt (331) der Ritzzähne (200, 300) ist, **dadurch gekennzeichnet, dass** der Spanwinkel (X) der Ritzzähne (200) 0° - (-25°) ist.

2. Kreissägeblatt (10) nach Anspruch 1, wobei die Spanfläche (311) und die Freigabefläche (321) der Ritzzähne (300) abgeschrägt sind.

3. Kreissägeblatt (10) nach einem der Ansprüche 1 oder 2, wobei sich die Schneidkante (330) der Ritzzähne entlang mindestens eines Abschnitts einer Verbindungsstelle zwischen der Spanfläche (311) und einer Seitenfläche (14, 15) der Ritzzähne (300) erstreckt.

4. Kreissägeblatt (10) nach einem der vorhergehenden Ansprüche, wobei die Ritzzähne (300) eine Verbindungskante (340) umfassen, die sich zwischen der Spanfläche (311) und der Freigabefläche (221) erstreckt, und wobei die Ritzzähne (300) eine hintere Kante (350) umfassen und wobei der Schneidpunkt (331) in einer Verbindungsstelle zwischen der Schneidkante (330), der Verbindungskante (340) und der hinteren Kante (350) ausgebildet ist.

5. Kreissägeblatt (10) nach einem der Ansprüche 1 - 4, wobei sich die Spanzähne (200) in der Symmetrieebene (Z) des Sägeblatts (10) erstrecken.

6. Kreissägeblatt (10) nach einem der Ansprüche 1 - 5, wobei der Spanwinkel (V) der Spanfläche (211) der Spanzähne (200) 5° - 40°, vorzugsweise 15° - 35° ist.

7. Kreissägeblatt (10) nach einem der Ansprüche 1 - 6, wobei die Ritzzähne (300) mit einem Abstand (SK) von t/3 - t eingestellt sind, wobei (t) die Dicke des Kreissägeblatts (10) ist.

## Revendications

1. Lame de scie circulaire (10) pour débroussaillage conçue pour être utilisée dans une débroussailleuse portative mécanique et comprenant une ouverture centrale (12) pour la fixation, de manière libérable, à une débroussailleuse et une pluralité de dents (200, 300) et de gorges (13) agencées en alternance sur la périphérie de la lame de scie (10) dans une direction de rotation (R), les dents (200, 300) comprenant des dents de coupe (200),
- chaque dent de coupe (200) comportant un côté avant (210) orienté dans la direction de rotation (R) et comprenant une face de coupe (211) et un côté arrière (220) comprenant une face de dépouille (221) et une arête tranchante (230) s'étendant entre la face de coupe (211) et la face de dépouille (221), un angle d'attaque (V) de la face de coupe (210) de la dent de coupe (200) étant supérieur à 0° ; les dents (200, 300) comprenant des dents d'incision (300),
- chaque dent d'incision (300) comportant un côté avant (310) orienté dans la direction de rotation (R) et comprenant une face de coupe (311) et une arête tranchante (330) et un côté arrière (320) comprenant une face de dépouille (321), un angle d'attaque (X) de la face de coupe (311) de la dent d'incision (300) étant égal ou inférieur à 0° et les dents d'incision (300) étant avoyées en alternance dans des directions opposées vers l'extérieur à partir d'un plan de symétrie (Z) de la lame de scie (10), et
les dents (200, 300) étant réparties le long de la périphérie de la lame de scie (10) dans un ordre répétitif d'une première dent d'incision (300.1) suivie d'une seconde dent d'incision (300.2) suivie d'une dent de coupe (200),
les dents d'incision (300) comprenant une pointe tranchante (331) et l'arête tranchante (330) des dents d'incision (300) s'étendant à partir de la pointe tranchante (331),
la distance (d1) du centre de la lame de scie à l'arête tranchante (230) des dents de coupe (200) étant inférieure à la distance (d2) du centre de la lame de scie (10) à la pointe tranchante (331) des dents d'incision (200, 300), **caractérisée en ce que** l'angle d'attaque (X) des dents d'incision (200) est compris entre 0° et -25°.

2. Lame de scie circulaire (10) selon la revendication 1, dans laquelle la face de coupe (311) et la face de dépouille (321) des dents d'incision (300) sont biseautées.

3. Lame de scie circulaire (10) selon l'une ou l'autre des revendications 1 et 2, dans laquelle l'arête tranchante (330) des dents d'incision s'étend le long d'au moins une partie d'une jonction entre la face de coupe (311) et une face latérale (14, 15) des dents d'incision (300).

4. Lame de scie circulaire (10) selon l'une quelconque des revendications précédentes, dans laquelle les dents d'incision (300) comprennent une arête de jonction (340) qui s'étend entre la face de coupe (311) et la face de dépouille (221) et dans laquelle les dents d'incision (300) comprennent une arête arrière (350) et dans laquelle la pointe tranchante (331) est formée dans une jonction entre l'arête tranchante (330), l'arête de jonction (340) et l'arête arrière (350).

5. Lame de scie circulaire (10) selon l'une quelconque des revendications 1 à 4, dans laquelle les dents de coupe (200) s'étendent dans le plan de symétrie (Z) de la lame de scie (10).

6. Lame de scie circulaire (10) selon l'une quelconque des revendications 1 à 5, dans laquelle l'angle d'attaque (V) de la face de coupe (211) des dents de coupe (200) est compris entre 5° et 40°, de préférence entre 15° et 35°.

7. Lame de scie circulaire (10) selon l'une quelconque des revendications 1 à 6, dans laquelle les dents d'incision (300) sont avoyées d'une distance (SK) comprise entre t/3 et t, t étant l'épaisseur de la lame de scie circulaire (10).
